(19) Europäisches Patentamt
European Patent Office
Office européen des brevets

(11) Veröffentlichungsnummer : **0 084 322**
**B1**

(12) # EUROPÄISCHE PATENTSCHRIFT

(45) Veröffentlichungstag der Patentschrift : **30.12.86**

(51) Int. Cl.⁴ : **B 01 D 19/04**

(21) Anmeldenummer : **83100046.8**

(22) Anmeldetag : **05.01.83**

(54) **Mittel zum Verhindern oder Beseitigen von Schaum, insbesondere in wässrigen Systemen.**

(30) Priorität : **20.01.82 DE 3201479**

(43) Veröffentlichungstag der Anmeldung : **27.07.83 Patentblatt 83/30**

(45) Bekanntmachung des Hinweises auf die Patenterteilung : **30.12.86 Patentblatt 86/52**

(84) Benannte Vertragsstaaten : **BE DE FR GB IT NL**

(56) Entgegenhaltungen :
**EP-A- 0 024 472**
**DE-A- 2 432 757**
**DE-A- 2 518 053**
**GB-A- 821 169**
**US-A- 4 077 894**
**Die Akte enthält technische Angaben, die nach dem Eingang der Anmeldung eingereicht wurden und die nicht in dieser Patentschrift enthalten sind.**

(73) Patentinhaber : **Th. Goldschmidt AG**
**Goldschmidtstrasse 100 Postfach 101461**
**D-4300 Essen 1 (DE)**

(72) Erfinder : **Fink, Hans-Ferdi**
**Brassertstrasse 46**
**D-4300 Essen 1 (DE)**
Erfinder : **Fock, Jürgen, Dr.**
**Mörsenbroicher Weg 114**
**D-4000 Düsseldorf 30 (DE)**

**EP 0 084 322 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Mittel zum Verhindern oder Beseitigen von Schaum, insbesondere in wäßrigen Systemen, wobei in einem, gegebenenfalls Wasser enthaltenden, organischen Lösungs- oder Verdünnungsmittel ein Entschäumungsmittel gelöst oder dispergiert ist, und wobei die Zubereitung außerdem feinteilige, gegebenenfalls hydrophobierte, Kieselsäure enthalten kann.

Es ist bekannt, daß Polyoxyalkylenmono- oder -diole oder deren Ether in wäßrigen Systemen schaumverhindernde oder schaumbeseitigende Eigenschaften aufweisen, wenn sie in diesen Systemen unlöslich sind. Dabei hat man in der Regel die Mono- oder Diole von Polyadditionsprodukten aus Ethylenoxid und Propylenoxid verwendet. Polyadditionsprodukte, die ausschließlich Oxyethyleneinheiten enthalten, entfalten ihre entschäumende Wirkung bei oder nach Überschreiten ihres Trübungspunktes in wäßriger Lösung.

Es ist ferner bekannt, daß pflanzliche oder mineralische Öle oder Siliconöle entschäumende Wirkung haben. Man hat auch bereits zur Erhöhung der entschäumenden Eigenschaften Mischpolymerisate hergestellt, welche aus Polyoxyalkylen- und Polysiloxanblöcken bestehen. Besonders bevorzugt sind dabei solche Blockmischpolymerisate, deren Polyoxyalkylenblock mindestens 80 Gew.-% Oxypropyleneinheiten aufweist. Eine solche Zubereitung ist z. B. in der DE-B-24 43 853 beschrieben. Bei dieser Zubereitung kann die entschäumende Wirksamkeit noch durch Zusatz hochdisperser Kieselsäure, die z. B. durch Flammhydrolyse hergestellt ist, erhöht werden.

In der DE-C-23 45 335 ist ein Entschäumer für wäßrige Lösungen oder Dispersionen beschrieben, welcher 80 bis 95 Gew.-% eines Mineralöles oder pflanzlichen oder tierischen Öles, 1 bis 7,5 Gew.-% hochdisperse Kieselsäure oder hochdisperses Aluminiumoxid, 1,0 bis 10 Gew.-% eines Methylpolysiloxan-Polyoxyalkylen-Blockmischpolymerisates, dessen Methylpolysiloxanblock 10 bis 60 Gew.-% des Polymerisates ausmacht und dessen Polyoxyalkylenblock 80 bis 100 Gew.-% Oxypropyleneinheiten aufweist, enthält.

Ziel der vorliegenden Erfindung ist es, ein Mittel mit noch höherer schaumverhindernder oder schaumbeseitigender Wirkung aufzufinden. Dabei wurde überraschenderweise gefunden, daß bestimmte langkettige, aliphatische Seitenketten tragende Polyoxyalkylenverbindungen hochwirksame Entschäumungsmittel sind, wenn sie bestimmten Bedingungen entsprechen.

Gegenstand vorliegender Erfindung ist deshalb ein Mittel zur Verhinderung oder Beseitigung von Schaum mit dem Kennzeichen, daß es als entschäumenden Wirkstoff Verbindungen der allgemeinen Formel

$$R^1-\left[O-(CH_2-\underset{\displaystyle R^4}{\underset{|}{C}}H-O-)_n R^2\right]_z \qquad (I)$$

worin die Substituenten und Indices folgende Bedeutung haben :

$R^1$ = z-wertiger Kohlenwasserstoffrest oder, falls z = 1 ist, ein Wasserstoffrest,

$R^2$ = Wasserstoff-, Alkyl-, Aryl-, $-CONHR^3-$,

$$-\overset{\displaystyle O}{\overset{\|}{C}}R^3-$$

oder $-SiR^3_3$-Rest, wobei höchstens 100/z % aller Reste $R^2$ Wasserstoffreste sein dürfen,

$R^3$ = einwertiger Kohlenwasserstoffrest,

$R^4$ = geradkettiger Alkylrest mit im Mittel 4 bis 16 Kohlenstoffatomen oder Methylrest, wobei aber höchstens 90 Mol-% der Reste $R^4$ Methylreste sein dürfen,

n = ganze Zahl $\geq$ 2,

z = ganze Zahl von 1 bis 3,

in wirksamen Mengen enthält.

Der Rest $R^1$ ist ein Wasserstoff- oder z-wertiger Kohlenwassertoffrest, wobei letzterer in seiner Wertigkeit dem Zahlenwert des Index z entspricht und somit ein- bis dreiwertig sein kann. Ist z = 1, ist $R^1$ ein Wasserstoffrest oder ein einwertiger Kohlenwasserstoffrest und hat dann vorzugsweise die Bedeutung eines Alkyl- oder Arylrestes. Als Alkylrest ist insbesondere ein niederer Alkylrest mit 1 bis 3 Kohlenstoffatomen, wie der Methyl-, Ethyl-, Propyl- und iso-Propylrest, bevorzugt. Der bevorzugte Arylrest ist der Phenylrest. Sowohl der Alkyl- wie auch der Arylrest kann gegebenenfalls substituiert sein. Beispiel eines substituierten Alkylrestes ist der Benzylrest ; Beispiel eines substituierten Arylrestes ist ein Alkylarylrest, wie etwa der Nonylphenyl- oder Dodecylphenylrest.

Ist z = 2, ist $R^1$ ein zweiwertiger Kohlenwasserstoffrest, insbesondere ein Alkylenrest mit vorzugsweise 2 bis 6 Kohlenstoffatomen, wie der Ethylen-, Propylen-, Butylen-, iso-Butylen- oder Hexylenrest.

Hat z einen Wert von 3, ist $R^1$ ein dreiwertiger Kohlenwasserstoffrest, der vorzugsweise mindestens 3

Kohlenstoffatome aufweist, insbesondere der Rest

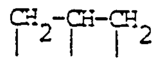 ,

der vom Glycerin hergeleitet ist.

Bevorzugt ist $z = 1$.

$R^2$ ist ein die Polyoxyalkylenketten abschließender, also endständiger Rest. Er kann die Bedeutung eines Alkyl- oder Arylrestes haben, wobei die niederen Alkylreste mit 1 bis 3 Kohlenstoffatomen bevorzugt sind. Hat $R^2$ die Bedeutung eines Arylrestes, ist der Phenylrest bevorzugt. In gleicher Weise wie bei $R^1$ gezeigt, können die Alkyl- oder Arylreste auch substituiert sein.

Die Reste $R^2$ können ferner die Bedeutung eines $—CONHR^3—$

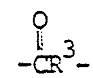 .

oder $—SiR^3{}_3$-Restes haben.

Die Endgruppen $—CONHR^3$ werden gebildet, wenn man die bei der Polymerisation entstehende endständige Hydroxylgruppe mit einem Monoisocyanat umsetzt. Beispiel eines solchen Monoisocyanats ist ein Alkylisocyanat, wie das n-Butylisocyanat oder das Phenylisocyanat. $R^3$ hat somit die Bedeutung eines Kohlenwasserstoffrestes, insbesondere eines Alkyl- oder Arylrestes, besonders bevorzugt die Bedeutung eines niederen Alkylrestes mit 1 bis 6 Kohlenstoffatomen.

Verestert man die endständige(n) Hydroxylgruppe(n) mit Carbonsäuren oder deren Anhydriden oder Säurechloriden, erhält man endständig die Gruppierung

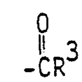 ,

wobei der Rest $R^3$ wiederum der Kohlenwasserstoffrest ist, der der Carbonsäure oder dem Derivat der Carbonsäure entspricht.

Man kann ferner die endständige(n) Hydroxylgruppe(n) durch Umsetzung mit $Cl—SiR^3{}_3$ blockieren. Hierbei ist $R^3$ im Regelfall ein Methylrest.

Der Rest $R^2$ kann auch die Bedeutung eines Wasserstoffrestes haben. Hier gilt jedoch die Maßgabe, daß höchstens 100/z % aller Reste $R^2$ Wasserstoffreste sein dürfen. Die besten entschäumenden Ergebnisse werden jedoch von Zubereitungen erzielt, bei denen alle endständigen OH-Gruppen blockiert sind. Innerhalb des Polymerisatgemisches können die Reste $R^2$ gleich oder verschieden sein.

$R^4$ ist ein geradkettiger, gesättigter Alkylrest, der im Mittel 4 bis 16 Kohlenstoffatome aufweist, oder ein Methylrest. Jedoch ist die Möglichkeit, daß $R^4$ ein Methylrest ist, dadurch eingeschränkt, daß höchstens 90 Mol-% der Reste $R^4$ Methylreste sein dürfen. Bei den Oxyalkyleneinheiten, bei denen $R^4$ ein Methylrest ist, handelt es sich um Oxypropyleneinheiten.

Die Definition, daß $R^4$ ein geradkettiger Alkylrest mit im Mittel 4 bis 16 Kohlenstoffatomen ist, bedeutet, daß innerhalb des Polymerisats die Kettenlänge des Restes $R^4$ unterschiedlich sein kann. Die Anzahl der Kohlenstoffatome aller Alkylseitenketten mit mehr als einem Kohlenstoffatom geteilt durch die Anzahl dieser Seitenketten muß eine Zahl ergeben, die zwichen 4 und 16 liegt. Selbstverständlich ist es auch möglich, das Polymerisat in bezug auf die längerkettigen Alkylreste einheitlich aufzubauen und z. B. solche Oxyalkyleneinheiten vorzusehen, bei denen der Rest $R^4$, wenn er die Bedeutung eines geradkettigen Alkylrestes hat, z. B. 4 oder 6 oder 10 Kohlenstoffatome aufweist. Besonders günstig haben sich für die erfindungsgemäße Verwendung jedoch diejenigen Verbindungen erwiesen, bei denen der Rest $R^4$ eine Mischung aus Resten mit 8 bis 12 Kohlenstoffatomen ist. Besonders bevorzugt sind die Verbindungen der Formel I, bei denen der Rest $R^4$ zumindest zu 50 % aus geradkettigen Alkylresten mit 4 bis 12 Kohlenstoffatomen, vorzugsweise 8 bis 12 Kohlenstoffatomen, besteht.

n ist eine ganze Zahl und mindestens gleich 2. Bevorzugt ist $n > 5$, insbesondere 10 bis 30.

z ist, wie bereits oben erwähnt, eine ganze Zahle von 1 bis 3. Bevorzugt hat z einen Wert von 1 oder 2.

Beispiele für erfindungsgemäße schaumverhindernde oder schaumbeseitigende Wirkstoffe sind

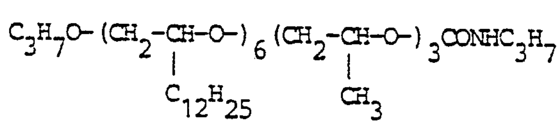

(II)

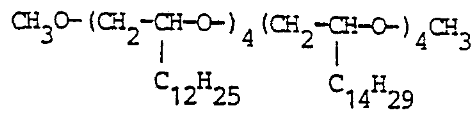

(III)

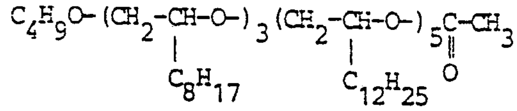

(IV)

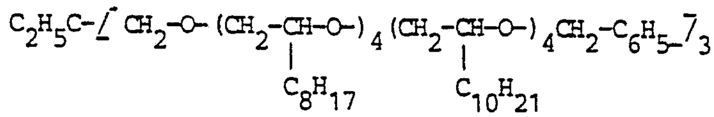

(V)

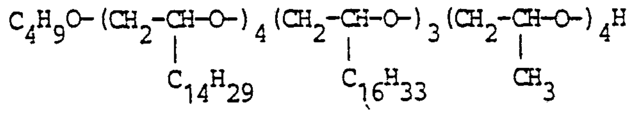

(VI)

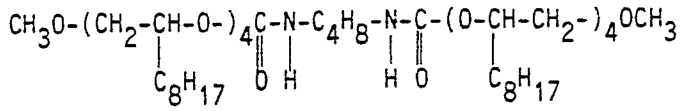

(VII)

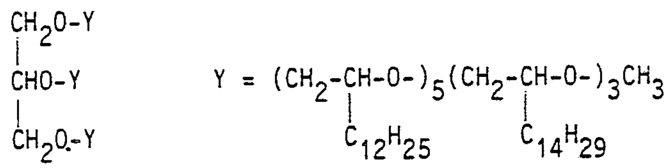

(VIII)

Die Verbindungen der im Anspruch 1 gezeigten Formel lassen sich in an sich bekannter Weise dadurch herstellen, daß man an einen z-wertigen Startalkohol der Formel $R^1(OH)_z$ die Alkylenoxide anlagert. Je nach Wertigkeit des Startalkohols und Bedeutung des Restes R kann als Startalkohol z. B. Methanol, Ethanol, Propanol, Butanol, Dodecanol, Phenol, Dodecylphenol, Benzylalkohol, Ethylglykol, Propyglykol oder Glycerin verwendet werden. Die endständigen Hydroxylgruppen können dann wie oben gezeigt mit Isocyanaten, Carbonsäuren oder deren Derivaten oder Trikohlenwasserstoffhalogensilanen umgesetzt werden.

Als Alkylenoxide kommen die α-Olefinoxide mit 6 bis 18 Kohlenstoffatomen und deren Gemische in Frage. Diese können zu Homopolymerisaten addiert werden. Derartige Polymerisationsverfahren sind z. B. in der US-A-2 987 489 und in der Zeitschrift « Bulletin of The Japan Petroleum Institute » (1965), Seiten 25 bis 30, beschrieben.

Soll $R^4$ auch die Bedeutung eines Methylrestes haben, kann man den α-Olefinoxiden Propylenoxid zumischen und dieses Gemisch reagieren lassen. Man erhält dann Polymerisate einer von der Reaktivität der einzelnen Epoxide abhängigen Verteilung. Es ist natürlich auch möglich, z. B. zunächst einen Teil der längerkettigen α-Olefinoxide zu einem Block zu addieren und hieran Propylenoxid anzulagern und gegebenenfalls erneut weitere Blöcke zu bilden. Es besteht jedoch Grund zu der Annahme, daß die gleichzeitige Polymerisation eines Gemisches der einzelnen Alkylenoxide zu besseren Ergebnissen in bezug auf die Entschäumung führt.

Die Verbindungen der Formel I sind je nach Gehalt an längerkettigen Oxyalkylengruppen und abhängig vom Molekulargewicht flüssige bis pastöse oder wachsartige Verbindungen. Sie lassen sich in unpolaren organischen Lösungsmitteln, wie z. B. Toluol, oder in polaren organischen Lösungsmitteln, wie z. B. niederen Alkoholen, wie Isopropanol, zu feinteiligen Dispersionen verarbeiten. Man kann auch Gemische von Lösungsmitteln verwenden, wobei solche Lösungsmittel oder Lösungsmittelgemische bevorzugt sind, bei denen die Wirkstoffe fein verteilt sind. Diese feine Verteilung kann durch entsprechende Rühr-, Dispergier- oder Homogenisiervorrichtungen begünstigt werden.

Gegebenenfalls kann man diesen Zubereitungen feinteilige Kieselsäure zusetzen. Man verwendet hierzu insbesondere durch Flammpyrolyse erhaltene Kieselsäure, die gegebenenfalls in an sich bekannter Weise ganz oder teilweise auf ihrer Oberfläche hydrophobiert ist. Besonders bevorzugt verwendet man die Kieselsäure in bis zu gleichen Gewichtsmengen, bezogen auf Wirkstoff. Jedoch werden bereits durch geringe Zusätze, z. B. 5 Gew.-%, bezogen auf Wirkstoff, hervorragende Resultate erzielt.

Erfindungsgemäße Zubereitungen können z. B. folgenden Aufbau haben :

| Wirkstoff | | Lösungsmittel | | Kieselsäure | Wasser |
|---|---|---|---|---|---|
| Formel | Menge [g] | Art | Menge [g] | [g] | [g] |
| II | 40 | Toluol | 60 | - | - |
| II | 30 | Toluol | 60 | 10 | - |
| IV | 50 | Toluol/i-Propanol 1 : 1 Vol.T. | 45 | 5 | - |
| IV | 30 | Toluol/i-Propanol 1 : 1 Vol.T. | 30 | 10 | 30 |
| III | 40 | Toluol | 30 | 30 | - |
| V | 20 | Toluol/i-Propanol 1 : 2 Vol.T. | 20 | 20 | 40 |
| VII | 60 | Toluol | 30 | 10 | - |

Die Zubereitungen werden den zu entschäumenden Medien in solchen Mengen zugesetzt, daß die Medien etwa 10 bis 200 ppm Wirkstoff enthalten.

Die entschäumende Wirkung zeigt sich üblicherweise bereits in dem angegebenen unteren Bereich, d. h. bei einer Zusatzmenge von 10 bis 100 ppm. Mit Zubereitungen entsprechend dem Gegenstand vorliegender Erfindung kann man mit besonderem Erfolg wäßrige Lösungen von ionogenen oder nichtionogenen Tensiden, wäßrige Dispersionen von Polymerisaten, Mineralöle und deren Emulsionen, Fermentier- und Gärbrühen entschäumen.

In den folgenden Beispielen wird zunächst die nichterfindungsgemäße Herstellung der Verbindungen der Formel I gezeigt. Es wird dann die Herstellung der entschäumenden Zubereitungen beschrieben und deren Wirksamkeit in bezug auf Schaumverhinderung und Schaumbeseitigung nach standardisierten Meßmethoden bestimmt.

Beispiel 1

A) Herstellung eines Poly-α-olefinoxids

In 1 966 g eines α-Olefinoxidgemisches aus 1 106 g (ca. 6 Mol) Dodecen-1-oxid und 860 g (ca. 4 Mol) Tetradecen-1-oxid werden 74 g (ca. 1 Mol) n-Butanol und 10,5 g (ca. 0,15 Mol) Kaliummethylat eindispergiert. Unter Rühren und unter einem Reinstickstoffstrom wird auf 140 °C aufgeheizt. Nach einer Reaktionsdauer von 4 h wird über die Epoxidzahl ein Umsatz von 67 % ermittelt. Nach schrittweiser Zugabe von 1 g Kaliummethylat über 11 h, wobei insgesamt 5 g des Alkoholats eingesetzt werden, wird bei 140 °C ein Umsatz von 91 % erreicht. Es sind nochmals 9 h Reaktionsdauer bei 140 °C erforderlich, um einen Umsatz von 98 % der Theorie zu erreichen. Insgesamt bedurfte es also einer Reaktionsdauer von 24 h.

Nach Neutralisation mit 30 %iger wäßriger Phosphorsäure, der Entfernung des Wassers durch Evakuieren und des entstandenen Salzes durch Filtrierer mit Hilfe eines Filterhilfsmittels wird ein hellgelbes, leicht wachsartiges, viskoses Produkt erhalten. Die Hydroxylzahl beträgt 51,9 was bei einer angenommenen Funktionalität von 1 einem Molekulargewicht von 1080 entspricht.

B) Anwendungstechnische Prüfung

9,5 g des gemäß 1 A) erhaltenen Produktes werden in 10 g Toluol gelöst und dazu 0,5 g einer hydrophobierten Kieselsäure (Sipernat® D 17) sowie 10 g Isopropylalkohol gegeben. In die erhaltene Suspension wird mit Hilfe einer Mizer-Scheibe für 2 min bei 1 750 U/min 10 g deionisiertes Wasser eindispergiert.

Zur Prüfung der entschäumenden Wirkung der erhaltenen Suspension wird eine Tensidlösung hergestellt. Die Tensidlösung besteht aus einer 0,1 %igen wäßrigen Lösung eines Tensids aus 2 Gew.-

Teilen des Natriumsalzes der Alkylenbenzolsulfonsäure und 1 Gew.-Teil eines Nonylphenolpolyglykolethers (Merpilan® E). Durch Einleiten von Luft mittels einer Fritte wird über die Tensidlösung ein Schaumvolumen von ca. 1 l erzeugt. In diese Lösung wird mit Hilfe einer medizinischen Spritze die entschäumende Zubereitung in einer solchen Menge zugegeben, daß die Tensidlösung 60 ppm der zu prüfenden Suspension enthält. Der Schaum sinkt innerhalb weniger Sekunden in sich zusammen. Erst nach einer Dauer von 18 min fortgesetzten Einleitens von Luft wird wieder ein Schaumvolumen von 1 l erreicht.

Beispiel 2

Herstellung von Poly- α-Olefinoxiden aus zwei α-Olefinoxiden mit 8 bis 14 Kohlenstoffatomen und anwendungstechnische Prüfung

Es wird gemäß Beispiel 1 verfahren, wobei jedoch Mischungen von zwei-α -Olefinoxiden mit unterschiedlicher Kohlenstoffzahl ($C_A/C_B$) im Molverhältnis 1 : 1 polymerisiert werden (s. Tabelle). Die Menge der eingesetzten α-Olefinoxide wird unter Zugrundelegung eines theoretischen Molekulargewichtes von 1 350 errechnet, wobei die Menge an n-Butanol jeweils 74 g (ca. 1 Mol) beträgt. Die Tabelle gibt die Gewichtsmenge der α-Olefinoxidmonomeren mit der Kohlenstofzahl $C_A$ und $C_B$ an. Die eingesetzte Menge an Kaliummethylat beträgt insgesamt 17,5 g (ca. 0,25 Mol), wobei 2/3 dieser Menge zu Beginn und 1/3, verteilt über 12 h Reaktionsdauer, 6 h nach dem Reaktionsbeginn eingebracht werden.

In der letzten Spalte der Tabelle sind die zur Erzielung eines Schaumvolumens von 1 l erforderlicher Zeiten t gemäß Beispiel 1 B) angegeben.

Tabelle

| $C_A/C_B$ | $C_A$ [g] | $C_B$ [g] | $OHZ_{gef.}$ | $M_{gef.}$ | t [min] |
|---|---|---|---|---|---|
| 14/10 | 735 | 541 | 52,4 | 1070 | 21 |
| 14/ 8 | 795 | 481 | 51,5 | 1090 | 22 |
| 12/10 | 690 | 586 | 50,1 | 1120 | 24 |
| 12/ 8 | 752 | 523 | 48,3 | 1160 | 30 |
| 10/ 8 | 702 | 574 | 48,8 | 1150 | 27 |

Beispiel 3

Herstellung von Poly-α-olefinoxiden aus zwei α-Olefinoxiden mit 12 und 14 Kohlenstoffatomen unter Mitverwendung von Propylenoxid und anwendungstechnische Prüfung

In 366 g eines α-Olefinoxidgemisches aus 205 g (ca. 1,1 Mol) Dodecen-1-oxid und 161 g (ca. 0,8 Mol) Tetradecen-1-oxid werden in einem Reaktor mit einem zwangsfördernden Umlaufsystem und zusätzlichem Rührer 74 g (ca. 1 Mol) n-Butanol und 10,5 g (ca. 0,15 Mol) Kaliummethylat eingebracht. Nach sorgfältiger Spülung mit Reinstickstoff wird auf 130 °C geheizt und ein Gemisch aus 550 g (ca. 9,5 Mol) Propylenoxid, 7 g (ca. 0,1 Mol) Kaliummethylat und 734 g eines Gemisches aus 411 g (ca. 2,2 Mol) Dodecen-1-oxid und 323 g (ca. 1,5 Mol) Tetradecen-1-oxid in Schritten von 20 g so zugegeben, daß einerseits die Reaktorinnentemperatur 130 °C und der Druck 3 bar nicht überschreiten und gleichzeitig nach jeder Zugabe die eingebrachten Monomeren abreagieren können, was an der Druckabnahme auf Normaldruck erkannt werden kann. Die erforderliche Dauer der schrittweisen Zugabe beträgt 9 h. Danach wird nochmals für 8 h nachreagiert.

Der aus der Epoxidzahl ermittelte Umsatz beträgt 97 % der Theorie. Nach Neutralisation mit 30 %iger wäßriger Phosphorsäure, Entfernung des Wassers durch Evakuieren und des entstandenen Salzes durch Filtrieren mit Hilfe eines Filterhilfsmittels wird ein gelbliches, viskoses Produkt erhalten. Die Hydroxylzahl beträgt 47,5, was bei einer angenommenen Funktionalität von 1 einem Molekulargewicht von 1180 entspricht.

Zur Erzielung eines Schaumvolumens gemäß Beispiel 1 B) ist eine Zeit von 20 min erforderlich.

Beispiel 4

Herstellung von Poly-α-olefinoxiden aus zwei α-Olefinoxiden mit 12 und 14 Kohlenstoffatomen unter

Mitverwendung von Propylenoxid

In 553 g eines α-Olefinoxidgemisches aus 312 g (ca. 1,3 Mol) Hexadecen-1-oxid und 241 g (ca. 0,9 Mol) Octadecen-1-oxid werden in einem Reaktor mit einem zwangsfördernden Umlaufsystem und zusätzlichem Rührer 74 g (ca. 1 Mol) n-Butanol und 10,5 g (ca. 0,15 Mol) Kaliummethylat eingebracht. Nach sorgfältiger Spülung mit Reinstickstoff wird auf 130 °C geheizt und ein Gemisch aus 232 g (ca. 4 Mol) Propylenoxid, 7 g (ca. 0,1 Mol) Kaliummethylat und 1 130 g eines Gemisches aus 648 g (ca. 2,7 Mol) Hexadecen-1-oxid und 482 g (ca. 1,8 Mol) Octadecen-1-oxid in Schritten von 20 g so zugegeben, daß einerseits die Reaktorinnentemperatur 130 °C und der Druck 3 bar nicht überschreiten und gleichzeitig nach jeder Zugabe die eingebrachten Monomeren abreagieren können, was an der Druckabnahme auf Normaldruck erkannt werden kann. Die erforderliche Dauer der schrittweisen Zugabe beträgt 9 h. Danach wird nochmals für 8 h nachreagiert.

Der aus der Epoxidzahl ermittelte Umsatz beträgt 98 % der Theorie. Nach Neutralisation mit 30 %iger wäßriger Phosphorsäure, Entfernung des Wassers durch Evakuieren und des entstandenen Salzes durch Filtrieren mit Hilfe eines Filterhilfsmittels wird ein gelbliches, viskoses Produkt erhalten. Die Hydroxylzahl beträgt 38,2, was bei einer angenommenen Funktionalität von 1 einem Molekulargewicht von 1 469 entspricht.

Zur Erzielung eines Schaumvolumens gemäß Beispiel 1 B) ist eine Zeit von 28 min erforderlich.

## Patentansprüche

1. Mittel zum Verhindern oder Beseitigen von Schaum, insbesondere in wäßrigen Systemen, wobei in einem, gegebenenfalls Wasser enthaltenden, organischen Lösungs- oder Verdünnungsmittel ein Entschäumungsmittel gelöst oder dispergiert ist, und wobei die Zubereitung außerdem feinteilige, gegebenenfalls hydrophobierte, Kieselsäure enthalten kann; dadurch gekennzeichnet, daß es als entschäumenden Wirkstoff Verbindungen der allgemeinen Formel

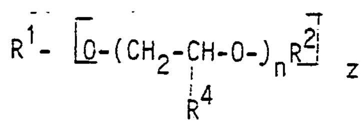

worin die Substituenten und Indices folgende Bedeutung haben :

$R^1$ = z-wertiger Kohlenwasserstoffrest oder, falls z = 1 ist, ein Wasserstoffrest,

$R^2$ = Wasserstoff-, Alkyl-, Aryl-, —$CONHR^3$—

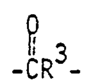

oder —$SiR^3_3$-Rest, wobei höchstens 100/z % aller Reste $R^2$ Wasserstoffreste sein dürfen,

$R^3$ = einwertiger Kohlenstoffrest,

$R^4$ = geradkettiger Alkylrest mit im Mittel 4 bis 16 Kohlenstoffatomen oder Methylrest, wobei aber höchstens 90 Mol-% der Reste $R^4$ Methylreste sein dürfen,

n = ganze Zahl $\geq$ 2,

z = ganze Zahl von 1 bis 3,

in wirksamen Mengen enthält.

2. Mittel nach Anspruch 1, dadurch gekennzeichnet, daß es einen Wirkstoff enthält, bei dem mindestens 50 % der Reste $R^4$ lineare Alkylreste mit im Mittel 4 bis 12 Kohlenstoffatomen sind.

3. Mittel nach Anspruch 2, dadurch gekennzeichnet, daß es einen Wirkstoff enthält, bei dem mindestens 50 % der Reste $R^4$ lineare Alkylreste mit im Mittel 8 bis 12 Kohlenstoffatomen sind.

4. Mittel nach einem der Ansprüche 1 bis 3, dadurch gekennzeichnet, daß es einen Wirkstoff enthält, bei dem z einen Wert von 1 oder 2 hat.

5. Mittel nach Anspruch 4, dadurch gekennzeichnet, daß es einen Wirkstoff enthält, bei dem $R^1$ ein z-wertiger Alkylrest mit bis zu 6 Kohlenstoffatomen ist.

6. Mittel nach Anspruch 5, dadurch gekennzeichnet, daß es einen Wirkstoff enthält, bei dem z = 1 und $R^1$ ein Alkylrest mit 1 bis 3 Kohlenstoffatomen ist.

7. Mittel nach einem oder mehreren der vorhergehenden Ansprüche, dadurch gekennzeichnet, daß es, bezogen auf Wirkstoff, bis zu gleiche Gewichtsmengen feinteilige Kieselsäure enthält.

## Claims

1. Agent for preventing or removing foam, in particular in aqueous systems, a defoaming agent being dissolved or dispersed in an optionally water-containing organic solvent or diluent and the preparation possibly also containing finely divided, optionally hydrophobized, silica, characterized in that it contains as the active defoaming substance compounds of the general formula

$$R^1-\left[O-(CH_2-\underset{\displaystyle R^4}{\underset{|}{C}H}-O-)_nR^2\right]_z$$

in which the substituents and indices have the following meaning :

$R^1$ = z-valent hydrocarbon radical or, when z = 1, a hydrogen radical,

$R^2$ = hydrogen, alkyl, aryl, $-CONHR^3$,

$$-\overset{\displaystyle O}{\overset{\|}{C}}R^3-$$

or $-SiR^3_3$ radical, provided that no more than 100/z % of all $R^2$ radicals are hydrogen radicals,

$R^3$ = monovalent carbon radical,

$R^4$ = straight-chain alkyl radical having on average 4 to 16 carbon atoms or methyl radical, provided, however, that no more than 90 mol-% of the $R^4$ radicals are methyl radicals,

n = whole number $\geqslant$ 2,

z = whole number from 1 to 3,

in active amounts.

2. Agent according to claim 1, characterized in that it contains an active substance in which at least 50 % of the $R^4$ radicals are linear alkyl radicals having on average 4 to 12 carbon atoms.

3. Agent according to claim 2, characterized in that it contains an active substance in which at least 50 % of the $R^4$ radicals are linear alkyl radicals having on average 8 to 12 carbon atoms.

4. Agent according to any one of claims 1 to 3, characterized in that it contains an active substance in which z has a value of 1 or 2.

5. Agent according to claim 4, characterized in that it contains an active substance in which $R^1$ is a z-valent alkyl radical having up to 6 carbon atoms.

6. Agent according to claim 5, characterized in that it contains an active substance in which z is = 1 and $R^1$ is an alkyl radical having 1 to 3 carbon atoms.

7. Agent according to one or more of the preceding claims, characterized in that, based on active substance, it contains up to equal amounts by weight of finely divided silica.

**Revendications**

1. Produit pour empêcher ou éliminer la mousse, en particulier dans des systèmes aqueux, dans lequel un agent antimoussant est dissous ou dispersé dans un solvant ou un diluant organique contenant éventuellement de l'eau, et dans lequel la préparation peut contenir en outre de la silice finement divisée, éventuellement hydrofugée, caractérisé en ce qu'il contient, en des quantités efficaces, en tant que matière active antimoussante des composés de formule générale

$$R^1-\left[O-(CH_2-\underset{\displaystyle R^4}{\underset{|}{C}H}-O-)_nR^2\right]_z$$

dans laquelle les substituants et les indices ont les significations suivantes :

$R^1$ = radical hydrocarboné z-valent, ou bien quand z = 1, un radical hydrogène,

$R^2$ = un radical hydrogène, alkyle, aryle, $-CONHR^3$,

$$-\overset{\displaystyle O}{\overset{\|}{C}}R^3-$$

ou $—SiR^3_3$, où au plus 100/z % de tous les radicaux peuvent être des radicaux hydrogène,

$R^3$ = un radical carboné monovalent,

$R^4$ = un radical alkyle à chaîne droite ayant en moyenne 4 à 16 atomes de carbone, ou le radical méthyle, mais où au plus 90 % en moles des radicaux $R^4$ peuvent être des radicaux méthyle,

n = un nombre entier $\geqslant 2$,

z = un nombre entier de 1 à 3.

2. Produit selon la revendication 1, caractérisé en ce qu'il contient une matière active dans laquelle au moins 50 % des radicaux $R^4$ sont des radicaux alkyle linéaires ayant en moyenne de 4 à 12 atomes de carbone.

3. Produit selon la revendication 2, caractérisé en ce qu'il contient une matière active dans laquelle au moins 50 % des radicaux $R^4$ sont des radicaux alkyle linéaires ayant en moyenne de 8 à 12 atomes de carbone.

4. Produit selon l'une des revendications 1 à 3, caractérisé en ce qu'il contient une matière active dans laquelle z a une valeur égale à 1 ou 2.

5. Produit selon la revendication 4, caractérisé en ce qu'il contient une matière active dans laquelle $R^1$ est un radical alkyle z-valent ayant jusqu'à 6 atomes de carbone.

6. Produit selon la revendication 5, caractérisé en ce qu'il contient une matière active dans laquelle z = 1 et $R^1$ est un radical alkyle ayant de 1 à 3 atomes de carbone.

7. Produit selon l'une ou plusieurs des revendications précédentes, caractérisé en ce qu'il contient, par rapport à la matière active, jusqu'à des teneurs pondérales identiques en silice finement divisée.